# EUROPEAN PATENT APPLICATION

(11) **EP 4 442 528 A1**
(43) Date of publication of application: **09.10.2024**
(21) Application number: 23167165.2
(22) Date of filing: 06.04.2023
(51) Int. Cl.: B60W 40/12, B60W 50/00

(54) **COMPUTER-IMPLEMENTED TIRE DETERIORATION ESTIMATING METHOD AND DATA PROCESSING SYSTEM**

(71) Applicant: TOYOTA JIDOSHA KABUSHIKI KAISHA, Toyota-Shi, Aichi-Ken 471-8571 (JP)
(72) Inventor: NAGAO, Makoto, 1140 BRUSSELS (BE); WEBB, Jonathan, 1140 BRUSSELS (BE); BOSSIO, Roberto, 1140 BRUSSELS (BE)
(74) Representative: Cabinet Beau de Loménie

(57) **Abstract**

The disclosure relates to a computer-implemented tire deterioration estimating method, comprising the steps of calculating (S400), using a vehicle model acting as a digital twin, a simulated vehicle response (R_{S}) to a driving command (C), and calculating (S600) an estimated tire deterioration (D) based on a vehicle response (R) to the driving command (C) and the simulated vehicle response (R_{S}). The disclosure also relates to a computer program product, computer-readable storage medium (402) and data processing system (500) for implementing this tire deterioration estimating method.

## Description

### BACKGROUND OF THE INVENTION

### 1. Field of the Invention

The disclosure relates to vehicle operational management and in particular to a tire deterioration estimating method and system.

### 2. Description of Related Art

Excessive tire deterioration can be detrimental for both vehicle safety and fuel economy. On the other hand, excessively frequent replacement of vehicle tires could have significant economic and environmental drawbacks. Consequently, close and accurate monitoring of tire deterioration can be advantageous for vehicle operational management, in particular, but not only, for the operation of large vehicle fleets.

In order to monitor tire deterioration, it has been proposed to incorporate dedicated deterioration sensors into the tires. However, this could involve significant additional cost and complexity, with limited reliability. In US patent application publication US 2020/001662 A1, it was disclosed to alternatively use a geometrical model and a machine learning model to estimate wear tread wear. However, this can only estimate one tire deterioration mode (uniform tire tread wear) and has limited accuracy.

### SUMMARY OF THE INVENTION

An object of the disclosure is that of providing a tire deterioration estimating method capable of estimating various modes of tire deterioration, and in particular those relevant to vehicle handling and safety, with increased accuracy.

According to a first aspect of the disclosure, this method may comprise the steps of calculating, using a vehicle model, a simulated vehicle response to a driving command, and calculating tire deterioration based on the vehicle response and on the simulated vehicle response. The vehicle response and simulated vehicle response may in particular each include at least one of a lateral acceleration, a longitudinal acceleration, and a yaw rate. The method may further comprise a further step of outputting a warning signal when the calculated tire deterioration exceeds a predetermined threshold.

The vehicle model forms a digital twin of the vehicle itself. Consequently, the relationship between the vehicle response and the simulated vehicle response of this digital twin to the same driving command can be indicative of the vehicle handling deterioration with respect to a design baseline, vehicle handling deterioration which is mainly imputable to tire deterioration. Through this method, it is thus possible to more accurately estimate tire deterioration, and in particular modes of tire deterioration with a direct impact on vehicle handling, and thus safety.

According to a second aspect, the driving command may be a driver input, including at least one of a steering wheel input, a brake pedal input, a throttle pedal input and a transmission gear or range selection. However, this method may also be applicable to autonomous and semi-autonomous vehicles, wherein at least some driving commands are outputted by a control unit rather than a driver.

According to a third aspect, the method may further comprise a step of determining a difference between a vehicle response to the driving command and the simulated vehicle response and, in the step of calculating the estimated tire deterioration, the estimated tire deterioration may be calculated from the difference between the vehicle response and the simulated vehicle response. The vehicle model may thus represent a digital twin of the vehicle according to its design baseline, in particular with unworn tires, so that the difference between the vehicle response and the simulated vehicle response may be representative of the vehicle handling deterioration, mainly imputable to tire deterioration, with respect to this design baseline.

Alternatively, however, according to a fourth aspect, calculating the estimated tire deterioration may comprise fitting a parameter of the vehicle model so that the simulated vehicle response becomes substantially identical to the vehicle response, and the estimated tire deterioration may then be inferred from a fitted value of said parameter. Therefore, the vehicle model may become a digital twin of the vehicle with the tire deterioration, and the fitted value be associated to a corresponding tire deterioration which may be inferred therefrom.

According to a fifth aspect, the step of calculating tire deterioration may in particular include calculating at least front and rear tire deterioration values. This may for example be facilitated by the vehicle response and simulated vehicle response including each at least a lateral acceleration and a yaw rate. Through the relationship between driving command, lateral acceleration and yaw rate, it is indeed possible to determine changes in over- and understeering behavior, which in turn may reflect different front and rear tire deterioration values. Nevertheless, alternatively to or in combination with the lateral acceleration and/or yaw rate, tire deterioration may also be calculated on the basis of other response values such as, for example, longitudinal acceleration, wheel rotational speed and skid in response to the driving command, since such braking and acceleration response can also be affected by tire deterioration.

According to a sixth aspect, the steps of obtaining, using the vehicle model, the simulated vehicle response to the driving command and calculating the estimated tire deterioration based on the vehicle response to the driving command and on the simulated vehicle response may be performed for each of a selected set of segments in a vehicle route, which may be for example a selected set of corners in the vehicle route. Said selected set of segments may for instance be selected based on the vehicle response and/or simulated vehicle response, in particular based on whether either or both reach or exceed a predetermined threshold. The method may further comprise an averaging step for averaging the estimated tire deterioration. In this case, the steps of calculating the simulated vehicle response and the estimated tire deterioration may also be performed for other segments in the vehicle route, and a weighted average of the estimated tire deterioration may be calculated in the averaging step, with a higher weight for the selected set of segments than for the other segments. Selecting segments with significant driving commands and corresponding vehicle responses, may thus increase the representativeness of the weighted average of the estimated tire deterioration. Alternatively, however, the steps (of calculating the simulated vehicle response and the estimated tire deterioration are only performed for the selected set of segments steps of calculating the simulated vehicle response and the estimated tire deterioration are only performed for the selected set of segments. The processing workload may thus also be reduced, while ensuring a representative output.

According to a seventh aspect, the step of calculating tire deterioration may be performed using a machine-learning-based tire deterioration model, which may in particular apply a light gradient-boosting machine ("LightGBM") framework.

According to an eighth aspect, the method may further comprise a step of detecting the vehicle response using one or more sensors. This vehicle response may thus include a detected vehicle response, as opposed to the simulated vehicle response.

However, according to a ninth aspect, the vehicle command may include a forecasted vehicle command, and the vehicle response may include a forecasted vehicle response. In particular, the vehicle may comprise a step of extrapolating the forecasted vehicle command and forecasted vehicle response from a linear regression of previous vehicle commands and vehicle responses. It is consequently possible to estimate not just past and current, but even future tire deterioration.

Tenth and eleventh aspects of the present disclosure respectively relate to a computer program product and computer-readable storage medium comprising instructions which, when the program is executed by a computer, cause the computer to carry out the steps of the method of any one of the first to seventh aspects.

Another object of the disclosure is that of providing a data processing system for tire deterioration estimation.

According to a twelfth aspect of the disclosure, this data processing system may comprise a simulation module, and an estimation module. The simulation module may be configured to calculate, using a vehicle model, a simulated vehicle response to a driving command. The estimation module may be configured to calculate tire deterioration based on a vehicle response to the driving command and on the simulated vehicle response.

The above summary of some example embodiments is not intended to describe each disclosed embodiment or every implementation of the invention. In particular, selected features of any illustrative embodiment within this specification may be incorporated into an additional embodiment unless clearly stated to the contrary.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a wheeled vehicle travelling a route and connected to a remote data center over a communication network ;
FIG. 2 is a functional representation of a tire deterioration estimating system according to a first embodiment;
FIG. 3 is a flowchart representing a tire deterioration estimation method according to the first embodiment;
FIG. 4 is a functional representation of a tire deterioration estimating system according to a second embodiment;
FIG. 5 is a flowchart representing a tire deterioration estimation method according to the second embodiment;
FIG. 6 is a functional representation of a tire deterioration estimating system according to a third embodiment;
FIG. 7 is a flowchart representing a tire deterioration estimation method according to the third embodiment.

### DETAILED DESCRIPTION OF EMBODIMENTS

While the invention is amenable to various modifications and alternative forms, specifics thereof have been shown by way of example in the drawings and will be described in detail. It should be understood, however, that the intention is not to limit aspects of the invention to the particular embodiments described. On the contrary, the intention is to cover all modifications, equivalents, and alternatives falling within the scope of the invention.

For the following defined terms, these definitions shall be applied, unless a different definition is given in the claims or elsewhere in this specification.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

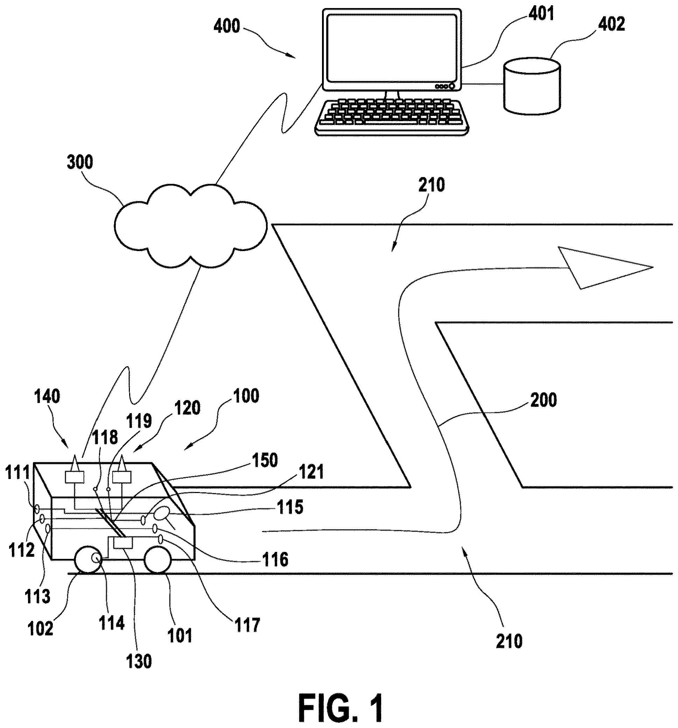

Fig. 1 illustrates a wheeled vehicle 100 which may comprise front and rear tires 101, 102, sensors including lateral and longitudinal acceleration sensors 111,112, yaw and wheel rotation speed sensors 113, 114, and steering wheel, throttle pedal and brake pedal position sensors 115, 116 and 117, a transmission gear or range selection sensor 121, rain and temperature sensors 118, 119, a geo-spatial positioning device 120, an electronic control unit (ECU) 130 and a wireless communication device 140. Said sensors 111 to 119 and 121, geo-spatial positioning device 120, ECU 130 and wireless communication device 140 may all be connected over a Controller Area Network (CAN) bus 150.

As also illustrated in Fig. 1, the vehicle 100 may travel over a route 200 including a set of corners 210 at each of which the vehicle 100 may turn. The vehicle 100 may further be connected, over the wireless communication device 140 and a communication network 300, possibly using the Internet protocol suite (TCP/IP), to a remote data center 400 which may include a computer 401 and a data storage medium 402.

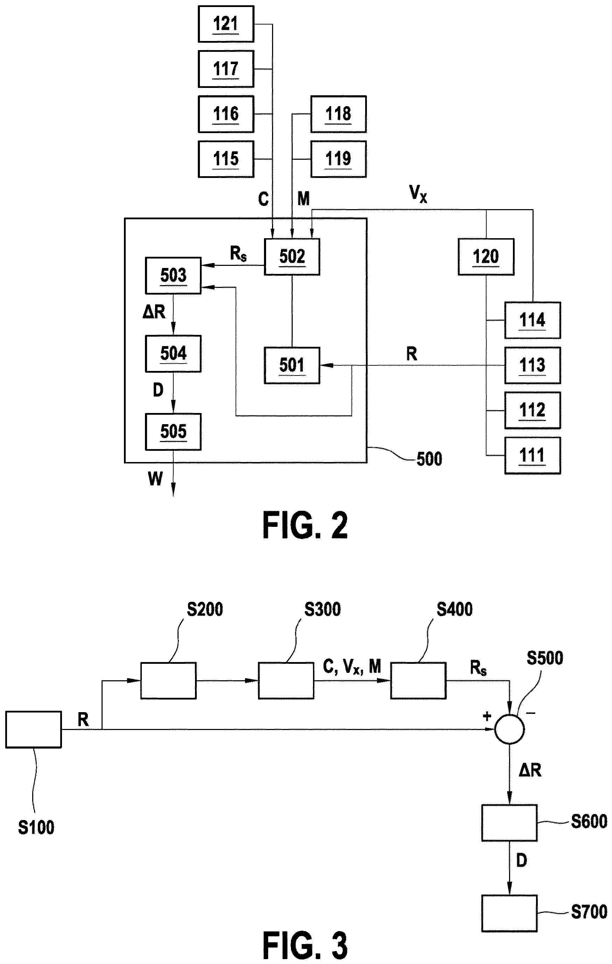

A data processing system 500 may include several functional modules. For example, as illustrated in Fig. 2, the data processing system 500 according to a first embodiment may comprise a selection module 501, a simulation module 502, a comparison module 503, an estimation module 504 and a warning module 505. This data processing system 500 may in particular be comprised within the computer 401 of the remote data center 400, but it may instead be comprised within the ECU 130 onboard vehicle 100, or its functional modules may be distributed between the computer 401 and the ECU 130. The data storage medium 402 may include a computer program product with instructions which, when the program is executed by computer 401, cause computer 401 to execute a tire deterioration estimation method as described below. However, this computer program may also be stored instead in a data storage medium onboard vehicle 100, or distributed between the vehicle 100 and remote data center 400.

As illustrated in Fig. 2, the selection module 501 may be connected to the sensors 111 to 114 and/or geo-spatial positioning device 120, and configured to select, within the route 200 travelled by the vehicle 100, a set of segments, which may in particular be the set of corners 210. In a first step S100 of the tire deterioration estimation method illustrated in Fig. 3, an actual vehicle response R may be detected, in particular for the selected segments, by sensors 111 to 114 and/or geo-spatial positioning device 120, and transmitted to the data processing system 500, wherein this actual vehicle response R may in particular comprise the actual lateral acceleration a_{y}, yaw angle α and yaw rate a. In a second step S200, the corners 210 may be selected by the selection module 501 on the basis of said actual vehicle response R, for example when one or more of the actual lateral acceleration a_{y}, actual yaw rate *α̇* and a change Δα in the actual yaw angle α exceed corresponding predetermined thresholds over a predetermined sampling period T.

A driving command C, which may in particular comprise at least a steering wheel input β detected by the steering wheel sensor 115, but possibly also throttle pedal and brake pedal position data detected by the corresponding sensors 116, 117, transmission gear or range selection data detected by transmission gear or range position sensor 121, a vehicle speed profile vₓ detected by the wheel rotation speed sensor 114 and/or the geo-spatial positioning device 120, and weather data M, may be acquired by the data processing system 500 in a third step S300 of the tire deterioration estimation method of Fig. 3, in particular for the segments selected in the first step S100. The weather data M may be obtained from the rain and temperature sensors 118, 119 and/or retrieved from a weather database, possibly over the wireless communication device 140, on the basis of a vehicle position detected by geo-spatial positioning device 120. They may comprise precipitation and temperature data, but also other meteorological data such as wind speed and orientation.

The simulation module 502, which may be connected to the sensors 117 to 119 and geo-spatial positioning device 120 to receive this driving command C, vehicle speed profile vₓ and weather data M, may be further configured to calculate a simulated vehicle response R_{S}, which may in particular comprise a simulated lateral acceleration a_{y,s} and yaw rate *α̇ₛ*, to the driving command C acquired in the third step S300. The calculation of the simulated vehicle response R_{S} may be carried out, in particular for the selected segments, in a fourth step S400 of the tire deterioration method of Fig. 3, using a vehicle model acting as a digital twin to the vehicle 100 and may possibly also take into account the vehicle speed profile vₓ and weather data M also acquired in the third step S300.

The comparison module 503, which may also be connected to the sensors 111 to 117 and geo-spatial positioning device 120, may be configured to determine, in a fifth step S500, a difference ΔR between the simulated vehicle response R_{S} calculated in step S400 by the simulation module 501, and the actual vehicle response R detected in step

S100.

The estimation module 504 may be configured to calculate, in a sixth step S600, in particular using a machine-learning-based tire deterioration model, an estimated tire deterioration D, which may include distinct front and rear tire deterioration values D_{f}, Dᵣ, from the difference ΔR between the actual vehicle response R and the simulated vehicle response R_{S}. The estimation module 504 may also be configured to average, in an averaging step S700, the estimated tire deterioration D calculated for the segments selected in step S200. In a variant of this first embodiment, steps S300 to S600 may be carried out not only for the selected segments, but also for other segments, and the estimation module may be configured to perform, in averaging step S700, a weighted average with a higher weight for the selected segments than for the other segments. The machine-learning-based tire deterioration model may in particular apply a LightGBM algorithm, and be trained using a dataset of experimental driving command, vehicle response and tire deterioration measurements for multiple route segments, in particular corners, over a given period, which may be of several months. The mean square errors between measured and simulated vehicle responses have been found to follow a log-normal distribution. Consequently, fitness of the tire deterioration model may be evaluated and optimized on the basis of the mean and standard deviation of the natural logarithm of these mean square errors.

The warning module 505 may be configured to output a warning signal W, at vehicle 100 or data center 400, when the estimated tire deterioration D exceeds a predetermined threshold. For instance, the warning signal may be output when the front tire deterioration value D_{f} exceeds a front tire deterioration threshold D_{f,max} or when the rear tire deterioration value Dᵣ exceeds a rear tire deterioration threshold D_{r,max}. This warning signal W may be output through a display or loudspeaker (not pictured) located in the vehicle 100 or the remote data center 400.

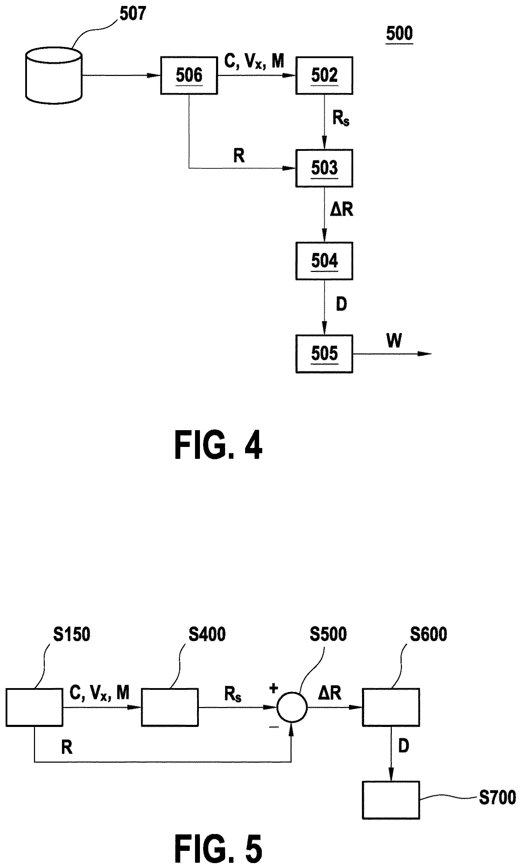

According to a second embodiment, the data processing system 500 may also be configured to forecast a future tire deterioration at a subsequent point in time, as illustrated in Figs. 4 and 5, wherein analogous elements and steps receive the same reference numbers as in Figs. 2 and 3. To perform this forecast, the data processing system may comprise a forecasting module 506, which may be configured to perform, in a first step S150, a linear regression of past vehicle commands, vehicle speed profiles, weather data and corresponding vehicle responses over an elapsed period and extrapolate therefrom, forecasted vehicle commands C, vehicle speed profiles vₓ and weather data M, and corresponding vehicle responses R over a future period. The past vehicle commands, speed profiles, weather data and corresponding vehicle responses may be stored in and retrieved from a data storage unit 507 of the data processing system 500. In a step S400 analogous to that of the first embodiment, one or more future vehicle commands C, vehicle speed profiles vₓ and weather data M forecast by the forecasting module 506 may then be input to the simulation module 502 to calculate corresponding simulated future vehicle responses R_{S}, using the vehicle model. In a step S500 analogous to that of the first embodiment, these simulated future vehicle responses R_{S} obtained on the basis of the future vehicle commands may then be compared, by the comparison module 503, with the corresponding future vehicle responses R forecast by the forecasting module 506, to determine a difference ΔR between them. This difference ΔR may then be input to the estimation module 504 to calculate, in step S600, one or more estimated future tire deteriorations D, which may also include distinct front and rear tire deterioration values D_{f}, Dᵣ. As in the first embodiment, the data processing system 500 may also comprise a warning module 505, which may be configured to output a warning signal W, at vehicle 100 or data center 400, when the estimated future tire deterioration D exceeds a predetermined threshold.

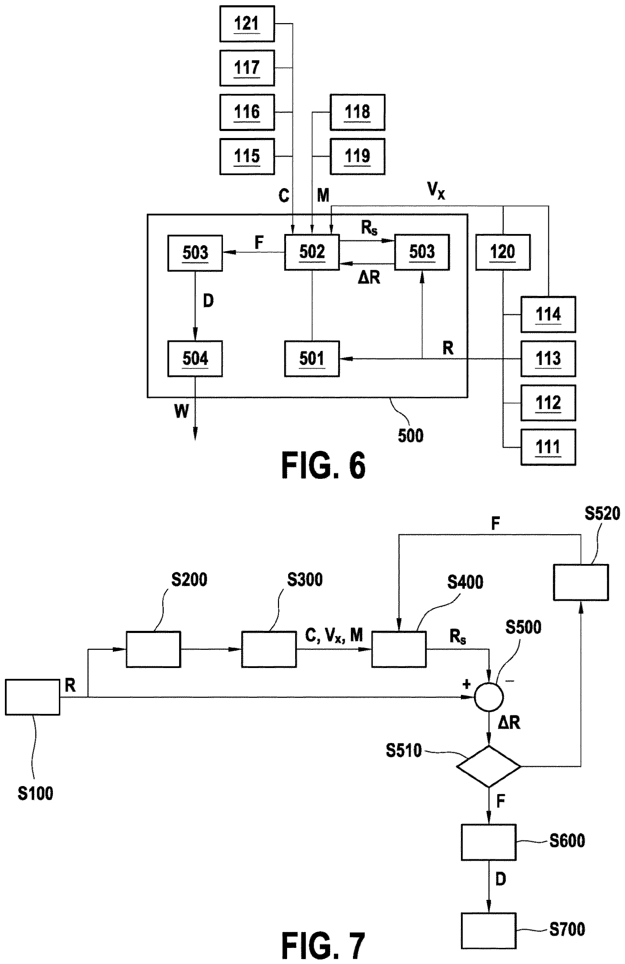

According to a third embodiment, the vehicle model may be a parametric model with a variable parameter F corresponding to the tire deterioration D. Consequently, the tire determination D may be inferred from a fitted value of this parameter F resulting in a simulated vehicle response Rₛ substantially identical to the detected or forecast vehicle response R for the same driving command C. As illustrated in Fig. 6, the data processing system 500 according to this third embodiment may also comprise a selection module 501, a simulation module 502, a comparison module 503, an estimation module 504 and a warning module 505, generally analogous to those of the first embodiment. In particular, the selection module 501, simulation module 502, comparison module 503 may be configured to perform steps S100 to S500 analogously to the first embodiment. However, the simulation module 502 and comparison module 503 may additionally be configured to perform a subroutine for fitting the vehicle model so that the vehicle response R and simulated vehicle response Rₛ become substantially identical. This subroutine may for instance be an iterative subroutine wherein in a step S510 the difference ΔR is compared by the comparison module 503 to a predetermined error threshold and, if the threshold is exceeded, the simulation module 502 adapts the value of the parameter F in a step S520, possibly on the basis of the difference ΔR, before performing again step S400 to calculate a new simulated vehicle response Rₛ. Steps S400, S500, S510 and S520 may thus form a loop which is repeated until the difference ΔR falls below the predetermined error threshold. Estimation module 504 may be configured to then calculate, in step S600, the estimated tire deterioration D on the basis of the fitted value of parameter F, rather than from the difference ΔR. The warning module 505 may then be configured to output the warning signal W, at vehicle 100 or data center 400, when the estimated tire deterioration D exceeds a predetermined threshold, analogously to the first embodiment.

Those skilled in the art will recognize that the present invention may be manifested in a variety of forms other than the specific embodiments described and contemplated herein. Individual features of these embodiments may be combined to form additional embodiments. For instance, future tire deterioration may be predicted, as in the second embodiment, on the basis of a fitted value of a parameter of the vehicle model, as in the third embodiment. Accordingly, departure in form and detail may be made without departing from the scope of the present invention as described in the appended claims.

## Claims

1. A computer-implemented tire deterioration estimating method, comprising at least :
calculating (S400), using a vehicle model, a simulated vehicle response (R_{S}) to a driving command (C); and
calculating (S600) an estimated tire deterioration (D) based on a vehicle response (R) to the driving command (C) and on the simulated vehicle response (R_{S}).

2. The computer-implemented tire deterioration estimating method of claim 1, wherein the driving command (C) includes a driver input, such as for example a steering wheel input, a brake pedal input, a throttle pedal input, and/or a transmission gear or range selection.

3. The computer-implemented tire deterioration estimating method of any one of claims 1 or 2, further comprising a step of determining (S500) a difference (ΔR) between a vehicle response (R) to the driving command (C) and the simulated vehicle response (R_{S}), and wherein, in the step of calculating (S600) the estimated tire deterioration (D), the estimated tire deterioration (D) is calculated from the difference (ΔR) between the vehicle response (R) and the simulated vehicle response (R_{S}).

4. The computer-implemented tire deterioration estimating method of any one of claims 1 or 2, wherein calculating (S600) the estimated tire deterioration (D) comprises fitting a parameter of the vehicle model so that the simulated vehicle response (Rₛ) becomes substantially identical to the vehicle response (R), and the estimated tire deterioration (D) is inferred from a fitted value of said parameter of the vehicle model.

5. The computer-implemented tire deterioration estimating method of any one of claims 1 to 4, wherein the estimated tire deterioration (D) includes at least front and rear tire deterioration values (D_{f}, Dᵣ).

6. The computer-implemented tire deterioration estimating method of any one of claims 1 to 5, wherein the vehicle response (R) and the simulated vehicle response (R_{S}) each include at least a lateral acceleration and a yaw rate.

7. The computer-implemented tire deterioration estimating method of any one of claims 1 to 6, wherein the steps of calculating (S400), using the vehicle model, the simulated vehicle response (R_{S}) to the driving command (C) and calculating (S600) the estimated tire deterioration (D) based on the vehicle response (R) to the driving command (C) and on the simulated vehicle response (R_{S}) are performed for each of a selected set of segments in a vehicle route (200).

8. The computer-implemented tire deterioration estimating method of claim 7, wherein said selected set of segments is a selected set of corners (210) in the vehicle route (200).

9. The computer-implemented tire deterioration estimating method of any one of claims 7 or 8, further comprising an averaging step (S700) for averaging the estimated tire deterioration (D).

10. The computer-implemented tire deterioration estimating method of claim 9, wherein the steps (S400, S600) of calculating the simulated vehicle response (R_{S}) and the estimated tire deterioration (D) are also performed for other segments in the vehicle route (200) and in the averaging step (S700) a weighted average of the estimated tire deterioration (D) is calculated with a higher weight for the selected set of segments than for the other segments.

11. The computer-implemented tire deterioration estimating method of any one of claims 7 to 9, wherein the steps (S400, S600) of calculating the simulated vehicle response (R_{S}) and the estimated tire deterioration (D) are only performed for the selected set of segments.

12. The computer-implemented tire deterioration estimating method of any one of claims 1 to 9, wherein the step of calculating (S600) the estimated tire deterioration (D) is performed using a machine-learning-based tire deterioration model.

13. The computer-implemented tire deterioration estimating method of claim 12, wherein the tire deterioration model applies a light gradient-boosting machine framework.

14. The computer-implemented tire deterioration estimating method of any one of claims 1 to 13, comprising a further step of outputting a warning signal (W) when the estimated tire deterioration (D) exceeds a predetermined threshold.

15. The computer-implemented tire deterioration estimating method of any one of claims 1 to 14, also comprising a step (S 100) of detecting the vehicle response (R) using one or more sensors.

16. The computer-implemented tire deterioration estimating method of any one of claims 1 to 15, wherein the vehicle command (C) includes a forecasted vehicle command, and the vehicle response (R) includes a forecasted vehicle response.

17. The computer-implemented tire deterioration estimating method of claim 16, also comprising a step of extrapolating the forecasted vehicle command and forecasted vehicle response from a linear regression of previous vehicle commands and vehicle responses.

18. A computer program product comprising instructions which, when the program is executed by a computer (401), cause the computer (401) to carry out the steps of the method of any one of claims 1 to 17.

19. A computer-readable storage medium (402) comprising instructions which, when executed by a computer (401), cause the computer (401) to carry out the steps of the method of claims 1 to 18.

20. A data processing system (500) comprising:
a simulation module (502) configured to calculate, using a vehicle model, a simulated vehicle response (R_{S}) to a driving command (C) ; and
an estimation module (504), configured to calculate an estimated tire deterioration (D) based on a vehicle response (R) to the driving command (C) and on the simulated vehicle response (R_{S}).
